# EUROPEAN PATENT APPLICATION

(11) **EP 4 715 852 A1**
(43) Date of publication of application: **25.03.2026**
(21) Application number: 25746816.5
(22) Date of filing: 28.05.2025
(51) Int. Cl.: H01G 11/22, H01G 11/30, H01G 11/86, H01G 11/32

(54) **CAPACITOR ELECTRODE SHEET AND PREPARATION METHOD THEREFOR, AND CAPACITOR USING SAME**

(30) Priority: 03.03.2025 CN 202510245673
(71) Applicant: Eve Energy Co., Ltd., Huizhou, Guangdong 516006 (CN)
(72) Inventor: XU, Feichuan, Huizhou, Guangdong 516006 (CN); YIN, Hao, Huizhou, Guangdong 516006 (CN); LIU, Chenxi, Huizhou, Guangdong 516006 (CN); HUANG, Chenglin, Huizhou, Guangdong 516006 (CN); CAO, Lang, Huizhou, Guangdong 516006 (CN)
(74) Representative: HGF
(86) International application number: PCT/CN2025/097631
(87) International publication number: WO 2026/020974

(57) **Abstract**

The present application provides a capacitor electrode sheet, a preparation method therefor, and a capacitor using the same. The capacitor electrode sheet includes an electrode active material layer and a conductive adhesive layer composited with the electrode active material layer. The capacitor electrode sheet possesses good conductivity and mechanical properties, and can enhance the energy density and cycling stability of the capacitors using the same.

## Description

This application claims priority to Chinese Patent Application No. 202510245673.1 filed on March 3, 2025, the disclosure of which is incorporated herein by reference in its entirety.

### TECHNICAL FIELD

The present application belongs to the field of capacitors, and relates to a capacitor electrode sheet, a preparation method therefor, and a capacitor using the same.

### BACKGROUND

Supercapacitors, also known as electric double-layer capacitors, electrochemical capacitors, gold capacitors, or farad capacitors, are a novel type of energy storage device positioned between conventional capacitors and storage batteries. A supercapacitor can be viewed as two inactive electrode plates suspended in an electrolyte, and when the electrode plates are applied with electric, the positive electrode plate attracts the negative ions in the electrolyte, and the negative electrode plate attracts the positive ions, actually forming two capacitive storage layers, thus, the separated positive ions are near the negative plates, and the negative ions are near the positive plates. Therefore, supercapacitors are a novel type of energy storage material, standing out due to a series of characteristics such as long cycle life, high power density, and wide operating temperature range. The performance of a supercapacitor depends greatly on the composition of the electrode material and the design of the electrode structure.

### SUMMARY

### TECHNICAL PROBLEM

In order to enhance the structural stability of the various components in a capacitor and to prevent the relative displacement between the electrode sheets and the capacitor shell during operation, it is common practice to weld the electrode sheets to the capacitor shell. However, in actual operations, poor welding results such as weld point perforation and excessive height of weld point frequently occur, which severely affect the further development and application of capacitors. On one hand, weld point perforation reduces the strength of the welding connection and conductivity, affecting the normal operation of the capacitor; on the other hand, the excessive height of weld point increases the risk of piercing the separator, threatening the safety performance of the capacitor.

### TECHNICAL SOLUTION

The present application provides a capacitor electrode sheet, a preparation method therefor, and a capacitor using the same. The capacitor electrode sheet possesses good conductivity and mechanical properties, and can enhance the energy density and cycling stability of the capacitors using the same.

According to a first aspect of the present application, a capacitor electrode sheet is provided, and the capacitor electrode sheet includes an electrode active material layer and a conductive adhesive layer composited with the electrode active material layer.

According to another aspect of the present application, a preparation method for the above capacitor electrode sheet is provided, which includes: mixing a binder, a conductive agent and a solvent to prepare a conductive adhesive material; coating the conductive adhesive material on a surface of the electrode active material layer; and curing and rolling pressing to obtain the capacitor electrode sheet.

According to another aspect of the present application, a capacitor is provided, and the capacitor includes the above capacitor electrode sheet or the capacitor electrode sheet prepared by the above preparation method. The capacitor features a simplified interlayer structure and reduced thickness in its electrode sheets, , which can effectively improve the energy density of the capacitor, reduce the possibility of self-discharge, and extend endurance; simultaneously, the capacitor also has high reliability and safety, and is easy to disassemble and conducive to mass production, achieving miniaturization and ultrathin to adapt to ultrathin terminal products.

### BENEFICIAL EFFECTS

The capacitor electrode sheet provided in the present application possesses good conductivity and mechanical properties, and can enhance the energy density and cycling stability of the capacitors using the same.

Other aspects will be appreciated upon reading and understanding drawings and detailed description.

### BRIEF DESCRIPTION OF DRAWINGS

FIG. 1 is a structural schematic diagram of a negative electrode sheet provided by Experimental Group 1A;
FIG. 2 is a structural schematic diagram of a positive electrode sheet provided by Experimental Group 1A; and
FIG. 3 is a structural schematic diagram of the capacitor provided by Experimental Group 1A.

The corresponding relationships of the reference numerals in the drawings are as follows: 1-positive electrode active material layer; 2- negative electrode active material layer; 3- separator; 4- insulating rubber ring; 5- cover; 6- shell; 7- positive electrode conductive adhesive layer; and 8- negative electrode conductive adhesive layer.

### DETAILED DESCRIPTION

According to a first aspect of the present application, a capacitor electrode sheet is provided, and the capacitor electrode sheet includes an electrode active material layer and a conductive adhesive layer composited with the electrode active material layer.

The capacitor electrode sheet provided in the present application includes a conductive adhesive layer and an electrode active material layer, and by utilizing the conductivity and mechanical properties of the conductive adhesive layer, the cycling stability of the capacitor electrode sheet is enhanced, as well as the energy density of the capacitor. On one hand, the firm bond between the conductive adhesive layer and the electrode active material layer reduces the impedance of the capacitor electrode sheet, and improves the flexibility of the capacitor electrode sheet, which can ensure that the capacitor electrode sheet maintains structural integrity under a certain degree of bending and distortion, and ensure the structural stability and safety of the capacitor electrode sheet, reducing the probability of powder loss and cracking of the electrode active coating, thereby improving the cycling performance and prolonging the service life of the capacitor. On the other hand, by utilizing the viscosity of the conductive adhesive layer in the capacitor electrode sheet, the connection between the capacitor electrode sheet and the capacitor shell can be realized, which abandons the conventional welding method, simplifies the preparation process of the electrode sheet, and improves the flexible characteristics and high energy density of the capacitor electrode sheet. Moreover, the conductive adhesive layer can fully contact the active material layer with the structural part shell, and at the same time, the conductive adhesive layer can play the role of current collection due to its good electrical conductivity.

In addition, it should be noted that in a case where the electrode sheet includes a conductive adhesive layer, a current collector and an electrode active material layer arranged in sequence, although the conductive adhesive layer can also attach to the electrode sheet and other capacitor components, when the capacitor suffers external impact or is dropped, the tensile force exerted by the capacitor shell on the conductive adhesive layer is greater than the tensile force exerted by the current collector on the double-sided tape, and the difference of the above-mentioned tensile forces is prone to cause the surface of the conductive adhesive layer adhered to the current collector experiencing edge breakage or tearing, resulting in burrs in the current collector, and burrs is easy to tip discharge with the capacitor metal shell, resulting in a short circuit in the capacitor. However, the capacitor electrode sheet provided in this solution does not employ a current collector. Even if the surface of the conductive layer adhered to the electrode active material layer experiences edge breakage or tearing due to the difference in tensile forces, the electrode active material layer is not easy to produce burrs, and short circuits due to burrs will not be caused. Therefore, the capacitor electrode sheet provided in this solution also improves the safety and anti-drop effect of the capacitor using the same.

Optionally, the capacitor electrode sheet consists of an electrode active material layer and a conductive adhesive layer composited with the electrode active material layer.

Optionally, the conductive adhesive layer is disposed on at least one side of the electrode active material layer.

Optionally, the conductive adhesive layer includes a binder and a conductive agent, and a mass ratio of the binder to the conductive agent is (0.5-4):(96-99.5). By adjusting the ratio of binder and conductive agent in the conductive adhesive layer, the conductivity of the capacitor electrode sheet is improved, and the transmission efficiency of the carriers is increased, thereby improving the fast charging performance of the capacitor using the capacitor electrode sheet, and ensuring that the conductive adhesive layer can still maintain excellent viscosity and structural stability even if it is immersed in the electrolyte for a long time, and can play a reliable fixing role in the capacitor electrode sheet using the same, and will not dissolve out the by-products that affect the normal operation of the battery.

Optionally, the conductive agent includes at least one of conductive carbon black, carbon nanotubes, graphene, and carbon fiber.

Optionally, the binder includes at least one of polyvinylidene fluoride, polytetrafluoroethylene, polyacrylic acid, sodium carboxymethylcellulose, and styrene-butadiene rubber.

Optionally, in the conductive adhesive layer, a specific surface area of the conductive agent is 40-100 m²/g, and a median particle size D₅₀ of the conductive agent is 10-100 nm. The conductive adhesive layer prepared by selecting a conductive agent that meets the above requirements has good conductivity and can achieve a low resistance value. By adjusting the specific surface area and median particle size D₅₀ of the conductive agent, the conductive agent can be evenly dispersed in the conductive adhesive layer to form an efficient conductive path, which can meet the extremely strict demands on conductivity of the capacitor, and the conductive agent can adhesive bond in the conductive adhesive layer, so that the conductive agent will not easily fall off from the surface of the conductive adhesive layer.

Optionally, a thickness of the conductive adhesive layer is 10-100 µm. The adjustment on the thickness of the conductive adhesive layer can enhance the bonding effect between the conductive adhesive layer and the electrode active material layer, reduce the impedance, improve the electrolyte resistance of the conductive adhesive layer, improve the structural stability of the capacitor, and increase the specific energy of the capacitor electrode sheet, achieving lightweight.

Optionally, the electrode active material layer includes a negative electrode active material, a negative electrode conductive agent, and a negative electrode binder, and the negative electrode active material includes at least one of a lithium-containing oxide negative electrode material, a carbon-based negative electrode material, and a silicon-based negative electrode material.

Optionally, the lithium-containing oxide negative electrode material includes at least one of lithium titanate, lithium vanadate, and lithium titanium silicate.

Optionally, the carbon-based negative electrode material includes at least one of graphite, mesocarbon microbead, a soft carbon, a hard carbon, and graphene.

Optionally, the silicon-based negative electrode material includes at least one of silicon material, silicon oxide material, or a silicon/carbon composite material.

Optionally, the electrode active material layer further includes a porous carbon electrode material, and a specific surface area of the porous carbon electrode material is 1400-2000 m²/g. By adding a porous carbon electrode material with a high specific surface area to the negative electrode sheet of the capacitor, an electric double-layer structure can be formed, which is beneficial to the improvement of the energy density of the capacitor.

Optionally, the porous carbon electrode material includes porous activated carbon and/or biomass carbon.

Optionally, a median particle size D₅₀ of the porous carbon electrode material is 3-10 µm.

Optionally, in the electrode active material layer, a mass fraction of the negative electrode active material is 60-98%.

Optionally, in the electrode active material layer, a mass fraction of the carbon electrode material is 2-20%.

Optionally, in the electrode active material layer, a mass fraction of the negative electrode conductive agent is 1-8%.

Optionally, in the electrode active material layer, a mass fraction of the negative electrode binder is 1~8%.

Optionally, the electrode active material layer includes a positive electrode active material, a positive electrode conductive agent, and a positive electrode binder, and the positive electrode active material includes a lithium-containing compound.

Optionally, the lithium-containing compound includes at least one of a layered transition metal oxide, a polyanionic compound, and a spinel compound.

Optionally, in a case where the capacitor electrode sheet is used as a negative electrode, a thickness of the electrode active material layer is 200-2000 µm.

Optionally, in a case where the capacitor electrode sheet is used as a positive electrode, a thickness of the electrode active material layer is 100-1000 µm.

According to another aspect of the present application, a preparation method for the above capacitor electrode sheet is provided, which includes: mixing a binder, a conductive agent and a solvent to prepare a conductive adhesive material; coating the conductive adhesive material on a surface of the electrode active material layer, and curing and rolling pressing to obtain the capacitor electrode sheet.

Optionally, in a case where the thickness of the electrode active material layer is more than 200 µm, a dry method is used for the preparation.

Optionally, the dry method includes the following operations: mixing the raw materials used to prepare the electrode active material layer in proportion to obtain an electrode material dry powder; then, subjecting electrode material dry powder to a heating-pressing manner to form the electrode active material layer with a required thickness.

Optionally, in a case where the thickness of the electrode active material layer is less than or equal to 200 µm, a wet method is used for the preparation.

Optionally, the wet method includes the following operations: mixing the positive electrode binder or the negative electrode binder with a solvent in proportion to obtain an electrode adhesive liquid, then mixing the remaining raw materials used to prepare the electrode active material layer with the electrode adhesive liquid to obtain a wet slurry, and finally coating the wet slurry to a flat surface, and baking the wet slurry to obtain the electrode active material layer.

According to another aspect of the present application, a capacitor is provided, and the capacitor includes the above capacitor electrode sheet or the capacitor electrode sheet prepared by the above preparation method. The electrodes in the above capacitor is thin and simple in interlayer structure, which can effectively improve the energy density of the capacitor, reduce the possibility of self-discharge, and extend the endurance; simultaneously, the capacitor also has high reliability and safety, and is easy to disassemble and conducive to mass production, achieving miniaturization and ultrathin to adapt to ultrathin terminal products.

Optionally, the capacitor includes a shell and a cover insulated connected to the shell, and the shell and the cover form an accommodating cavity, a positive electrode sheet, a separator, and a negative electrode sheet laminated in sequence inside the accommodating cavity, wherein the positive electrode sheet is at least partially connected to the shell, the negative electrode sheet is at least partially connected to the cover, the positive electrode sheet and/or the negative electrode sheet include the capacitor electrode sheet, and the conductive adhesive layer of the capacitor electrode sheet is arranged face away from the separator. Compared with the conventional multilayer laminated or winding electrode sheet, the above capacitor uses a single positive electrode sheet and a negative electrode sheet, respectively, which can greatly improve the energy density of the capacitor; and at the same time, the production process is simple and the production efficiency is high, which is conducive to mass production and adapts to ultrathin products.

Optionally, the negative electrode sheet is the capacitor electrode sheet, and the conductive adhesive layer of the capacitor electrode sheet is connected to the cover.

Optionally, the positive electrode sheet is the capacitor electrode sheet, and the conductive adhesive layer of the capacitor electrode sheet is connected to the shell.

Optionally, the chamber is further filled with electrolyte.

Optionally, the shell is connected to the cover via an insulating component.

Optionally, the shell is snapped to the cover via an insulating component.

Optionally, the insulating component is disposed inside the shell, and the cover is snapped to the insulating component.

Optionally, the insulating component is an insulating rubber ring.

Optionally, the separator includes a polymer separator, a non-woven separator, or a fiberglass separator.

Optionally, the shell is made of stainless steel.

Optionally, the cover is made of stainless steel.

Optionally, a material of the insulating component includes at least one of polypropylene, polyphenylene sulfide or polyetheretherketone.

Optionally, the electrolyte includes an organic solvent and a lithium salt.

Optionally, the organic solvent includes a carbonate solvent and/or an ether solvent.

Optionally, the lithium salt includes at least one of LiPF₆, LiTFSI, LiFSI, LiBOB, or LiBF₄.

Optionally, an area ratio of the conductive adhesive layer to the electrode active material layer is (0.95-1.05):(0.95-1.05).

Optionally, an area ratio of the conductive adhesive layer to the electrode active material layer is 1:1.

Optionally, the capacitor electrode sheet is circular, and a diameter ratio of the conductive adhesive layer to the electrode active material layer is (0.95-1.05):(0.95-1.05).

Optionally, the capacitor electrode is circular, and a diameter ratio of the conductive adhesive layer to the electrode active material layer is 1:1.

Optionally, a diameter of the capacitor is 10-24 mm.

Optionally, a thickness of the capacitor is 1.6-5 mm.

In order to enable those skilled in the art to better understand the technical solutions in the present application, the technical solutions in the present application will be described clearly and completely in conjunction with the embodiments and drawings in the embodiments of the present application below. Apparently, the embodiments described are part, not all, of the embodiments of the present application. Based on the embodiments of the present application, all other embodiments obtained by those skilled in the art are within the scope of the present application on the premise that no creative work is done.

### Example 1

### Experimental Group 1A

This experimental group provides a capacitor, which includes a positive electrode sheet, a negative electrode sheet, a separator 3, an insulating rubber ring 4, a shell 6, and a cover 5. Both the positive sheet and the negative sheet adopt capacitor electrode sheets.

### 1. Negative electrode sheet

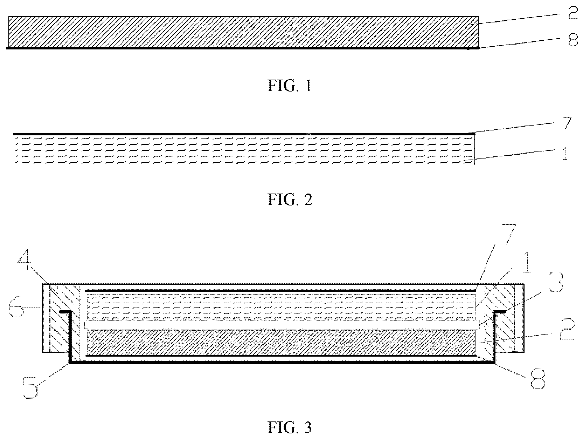

As shown in FIG. 1, the negative electrode sheet consists of a negative electrode active material layer 2 and a negative electrode conductive adhesive layer 8 composited with the negative electrode active material layer 2. The raw material composition of the negative electrode sheet is shown in the following table, wherein the negative electrode active material layer 2 has a thickness of 1500 µm, the negative electrode conductive adhesive layer 8 has a thickness of 50 µm, the negative electrode sheet is circular, the diameter ratio of the negative electrode conductive adhesive layer 8 to the negative electrode active material layer 2 is 1:1, and the area ratio of the negative electrode active material layer 2 to the negative electrode conductive adhesive layer 8 is 1:1.

**Table 1. The raw material composition of the negative electrode active material layer 2 and the negative electrode conductive adhesive layer 8**

| Composition of components | | | Mass fraction (wt%) |
|---|---|---|---|
| Negative electrode active material layer 2 | Negative electrode active material | Lithium-containing oxide | 75 |
| | Porous carbon electrode material | Porous activated carbon | 17 |
| | Negative electrode conductive agent | Conductive carbon black | 3 |
| | Negative electrode binder | Polyvinylidene fluoride | 5 |
| Negative electrode conductive adhesive layer 8 | Binder | Polyacrylic acid | 1 |
| | Conductive agent | Conductive carbon black | 99 |

In the raw materials for preparing the negative electrode active material layer 2, lithium titanate is used as the lithium-containing oxide, and the porous activated carbon has a specific surface area of 1700-1800 m²/g with a median particle size D₅₀ of 6-7 µm; the negative electrode conductive agent has a specific surface area of 50-60 m²/g with a median particle size D₅₀ of 80-90 nm. In the raw materials used to prepare the negative electrode conductive adhesive layer 8, the conductive carbon black has a specific surface area of 70-90 m²/g with a median particle size D₅₀ of 10-30 nm.

The preparation method for the negative electrode sheet includes the following steps.

Preparation of the negative electrode active material layer 2: the raw materials for preparing the negative electrode active material layer 2 were mixed in proportion to give a negative electrode material dry powder; and the negative electrode material dry powder was subjected to a manner of heating-pressing to form the negative electrode active material layer 2 with a required thickness.

Preparation of the negative electrode conductive adhesive layer 8: a binder, a conductive agent, and a solvent were mixed to give a conductive adhesive liquid; and the conductive adhesive liquid was coated on a surface of the negative electrode active material layer 2, then the negative electrode active material layer 2 was cured and roll-pressed to form the negative electrode sheet.

### 2. Positive electrode sheet

As shown in FIG. 2, the positive electrode sheet is composed of a positive electrode active material layer 1 and a positive electrode conductive adhesive layer 7 composited with the positive electrode active material layer 1. The raw material composition of the positive electrode sheet is shown in the following table, wherein the thickness of the positive electrode active material layer 1 is 800 µm, the thickness of the positive electrode conductive adhesive layer 7 is 50 µm, the positive electrode sheet is circular, the diameter ratio of the positive electrode conductive adhesive layer 7 and the positive electrode active material layer 1 is 1:1, and the area ratio of the positive active material layer 1 and the positive conductive adhesive layer 7 is 1:1.

**Table 2. The raw material composition of the positive electrode active material layer 1 and the positive electrode conductive adhesive layer 7**

| Composition of components | | | Mass fraction (wt%) |
|---|---|---|---|
| Positive electrode active material layer 1 | Positive electrode active material | Layered transition metal oxide | 85 |
| | Positive electrode conductive agent | Conductive carbon black | 9 |
| | Positive electrode binder | Polyvinylidene fluoride | 6 |
| Positive electrode conductive adhesive layer 7 | Binder | Polyacrylic acid | 1 |
| | Conductive agent | Conductive carbon black | 99 |

In the raw materials for preparing the positive electrode active material layer 1, the positive electrode conductive agent has a specific surface area of 50-60 m²/g with a median particle size D₅₀ of 80-90 µm. In the raw materials used to prepare the positive electrode conductive adhesive layer 7, the conductive carbon black has a specific surface area of 70-90 m²/g with a median particle size D₅₀ of 10-30 nm.

The preparation method for the positive electrode sheet includes the following steps.

Preparation of the positive electrode active material layer 1: the raw materials used to prepare the positive electrode active material layer 1 were mixed in proportion to give a positive electrode material dry powder; and the positive electrode material dry powder was subjected to a manner of heating-pressing to form the positive electrode active material layer 1 with a required thickness.

Preparation of the positive electrode conductive adhesive layer 7: a binder, a conductive agent, and a solvent were mixed to give a conductive adhesive liquid; and the conductive adhesive liquid was coated on a surface of the positive electrode active material layer 1, then the positive electrode active material layer 1 was cured and roll-pressed to form the positive electrode sheet.

### 3. Capacitor

As shown in FIG. 3, the shell 6 forms an accommodating cavity with the cover 5, and the positive electrode sheet, the separator 3 and the negative electrode sheet are laminated in sequence inside the accommodating cavity, so that the separator 3 is between the positive electrode sheet and the negative electrode sheet; the cover 5 and the shell 6 are separated by the insulating rubber ring 4; the positive electrode conductive adhesive layer 7 of the positive electrode sheet is arranged facing away from the separator, the positive electrode conductive adhesive layer 7 of the positive electrode sheet is at least partially connected with the shell 6, the negative electrode conductive adhesive layer 8 of the negative electrode sheet is arranged facing away from the separator, the negative electrode conductive adhesive layer 8 of the negative electrode sheet is at least partially connected with the cover 5, the insulating rubber ring 4 is disposed inside the shell 6, and the cover 5 is snapped to the insulating rubber ring 4.

The shell 6 is made of stainless steel, the cover 5 is made of stainless steel, and the insulating rubber ring 4 is made of polypropylene. The accommodating cavity is further filled with electrolyte, and the electrolyte includes LiPF₆, EC, DMC and EMC.

The size specification of the capacitor provided in this embodiment is 1016 (with a diameter of 10 mm and a thickness of 1.6 mm). In other embodiments, a size specification of the capacitor include, but is not limited to, 1016 (with a diameter of 10 mm and a thickness of 1.6 mm), 1216 (with a diameter of 12 mm and a thickness of 1.6 mm), 2016 (with a diameter of 20 mm and a thickness of 1.6 mm), 2032 (with a diameter of 20 mm and a thickness of 3.2 mm) and 2450 (with a diameter of 24 mm and a thickness of 5 mm).

### Comparative Group 1A

In this comparative group, a capacitor is prepared referring to the preparation method provided by Experimental Group 1A. The difference between this comparative group and Experimental Group 1A is that: an aluminum foil with a thickness of 180 µm was used to replace the negative electrode conductive adhesive layer 8 of Experimental Group 1A, and an aluminum foil with a thickness of 180 µm was used to replace the positive electrode conductive adhesive layer 7 of Experimental Group 1A. At the same time, in the process of preparing the capacitor, the aluminum foil in the negative electrode was connected with the cover 5 by means of welding, and the aluminum foil in the positive electrode was connected with the shell 6 by means of welding. Other raw material ratios and preparation method were strictly consistent with those in Experimental Group 1A.

### Comparative Group 2A

In this comparative group, a capacitor is prepared referring to the preparation method provided by Experimental Group 1A. The difference between this comparative group and Experimental Group 1A is that: the negative electrode sheet included a negative electrode conductive adhesive layer 8, a negative electrode current collector, and a negative electrode active material layer 2 arranged sequentially, and an aluminum foil with a thickness of 180 µm was used as the negative electrode current collector; the positive electrode sheet included a positive electrode conductive adhesive layer 7, a positive current collector and a positive electrode active material layer 1 arranged sequentially, and an aluminum foil with a thickness of 180 µm was used as the positive electrode current collector. Other raw material ratios and preparation method were strictly consistent with those in Experimental Group 1A, especially the thickness and composition of components of the negative electrode conductive adhesive layer 8, the negative electrode active material layer 2, the positive electrode conductive adhesive layer 7, and the positive electrode active material layer 1 were strictly consistent with those in Experimental Group 1A.

### Comparative Group 3A

In this comparative group, a capacitor is prepared referring to the preparation method provided by Experimental Group 1A. The difference between this comparative group and Experimental Group 1A is that: an aluminum-plated film current collector with a thickness of 10 µm was used to replace the negative electrode conductive adhesive layer 8 of Experimental Group 1A, and an aluminum-plated film current collector with a thickness of 10 µm was used to replace the positive electrode conductive adhesive layer 7 of Experimental Group 1A. At the same time, in the process of preparing the capacitor, the aluminum-plated film current collector in the negative electrode was connected with the cover 5 by means of welding, and the aluminum-plated film current collector in the positive electrode was connected with the shell 6 by means of welding. Other raw material ratios and preparation method were strictly consistent with those in Experimental Group 1A.

### Testing Example 1

Test objects: the capacitors provided by the Experimental Groups and Comparative Groups in Experimental Group 1A.

### Test items and test methods

(1) Capacity test: A constant-current discharge method was used. The capacitance deviation should be more than or equal to 80% of the rated capacitance and less than or equal to 180% of the rated capacitance, that is, the discharge capacity should be between 0.352 F and 0.792 F. A higher discharge capacitance within this range indicates superior electrical performance of the capacitor. The capacitor was connected to a direct-current circuit with a constant current/constant voltage source, and charged for 30 min at a constant voltage after the constant current/constant voltage source reached the rated voltage UR, and then the capacitor was connected a the circuit with a constant current discharge device, and discharged at a constant current I (I = 0.1 ± 0.03C), and the voltage at both ends of the capacitor was measured; t1 was timed from U₁ = 0.8UR, stopped at U₂ = 0.4UR as t₂, and the discharge capacity value was calculated by the formula C = I(t₂ - t₁)/U₁ - U₂.
(2) ESR test: An alternating-current test was performed, and an internal resistance tester was used for measurement. A lower ESR indicates superior electrical performance of the capacitor.

Test results: shown in the table below.

**Table 3. Test data obtained from this testing example and the structure of each test object**

| Group | Structure of the electrode sheet | Capacity (F) | ESR (Ω) |
|---|---|---|---|
| Experimental Group 1A | Electrode active material layer + conductive adhesive layer | 0.594 | 1.52 |
| Comparative Group 1A | Electrode active material layer + metal current collector | 0.443 | 2.35 |
| Comparative Group 2A | Electrode active material layer + metal current collector + conductive adhesive layer | 0.513 | 2.27 |
| Comparative Group 3A | Electrode active material layer + aluminum-plated film current collector | 0.354 | 3.61 |

### Result analysis

From the comparison of the performance of the capacitors provided by Experimental Group 1A and Comparative Groups 1A-3A, it can be found that in a case where the capacitor adopts the capacitor electrode sheet that includes the electrode active material layer and the conductive adhesive layer composited with the electrode active material layer, the capacitor has both higher capacity and lower ESR impedance, which means that the capacitor has superior energy density and electrochemical performance.

From the comparison of the capacitors provided by Experimental Group 1A, Comparative Group 1A, and Comparative Group 3A, it can be found that in the preparation process of the capacitor of Experimental Group 1A, the traditional welding process is eliminated, and possibility of structural weakness due to the stress concentration between the current collector and the capacitor shell is reduced, reflecting in the lower ESR impedance of the capacitor of Experimental Group 1A.

From the comparison of the capacitors provided by Experimental Group 1A and Comparative Group 2A, it can be found that in the capacitor provided by Comparative Group 2A, electrode sheet containing both metal current collector and conductive adhesive layer are used, and dissimilar material contact surfaces between the electrode active material layer and the metal current collector and between the metal current collector and the conductive adhesive layer are existed in the electrode sheet, that is, there are at least two layers of dissimilar material contact surfaces, while in the capacitor provided by Experimental Group 1A, there is only one layer of dissimilar material contact surface in the electrode sheet, reflecting in the lower ESR impedance of the capacitor in Experimental Group 1A. At the same time, as found in the actual test results, the capacitor provided by Experimental Group 1A shows excellent safety and drop resistance performance in the 1.8 m drop test. The capacitor of Experimental Group 1A still shows good structural stability and electrochemical performance after the drop test, and are not easy to capacitor short circuit, while the capacitor provided by Comparative Group 2A shows uneven electric field distribution and local overheating after the drop test.

### Example 2

### Experimental Group 1B

In this experimental group, a capacitor is prepared referring to the preparation method provided by Experimental Group 1A. The difference between this experimental group and Experimental Group 1A is that: in the preparation process of the positive electrode conductive adhesive layer 7 and the negative electrode conductive adhesive layer 8, the feeding amounts of the conductive agent and the binder was adjusted so that the mass ratio of the conductive agent to the binder was 0.3:99.7. Other raw material ratios and preparation method were strictly consistent with those in Experimental Group 1A.

### Experimental Group 2B

In this experimental group, a capacitor is prepared referring to the preparation method provided by Experimental Group 1A. The difference between this experimental group and Experimental Group 1A is that: in the preparation process of the positive electrode conductive adhesive layer 7 and the negative electrode conductive adhesive layer 8, the feeding amounts of the conductive agent and the binder was adjusted so that the mass ratio of the conductive agent to the binder was 0.5:99.5. Other raw material ratios and preparation method were strictly consistent with those in Experimental Group 1A.

### Experimental Group 3B

In this experimental group, a capacitor is prepared referring to the preparation method provided by Experimental Group 1A. The difference between this experimental group and Experimental Group 1A is that: in the preparation process of the positive electrode conductive adhesive layer 7 and the negative electrode conductive adhesive layer 8, the feeding amounts of the conductive agent and the binder was adjusted so that the mass ratio of the conductive agent to the binder was 4:96. Other raw material ratios and preparation method were strictly consistent with those in Experimental Group 1A.

### Experimental Group 4B

In this experimental group, a capacitor is prepared referring to the preparation method provided by Experimental Group 1A. The difference between this experimental group and Experimental Group 1A is that: in the preparation process of the positive electrode conductive adhesive layer 7 and the negative electrode conductive adhesive layer 8, the feeding amounts of the conductive agent and the binder was adjusted so that the mass ratio of the conductive agent to the binder was 5:95. Other raw material ratios and preparation method were strictly consistent with those in Experimental Group 1A.

### Testing Example 2

Test objects: the capacitors provided by the Experimental Group 1A and all Experimental Groups of Example 2.

### Test items and test methods

(1) Capacity test: strictly consistent with those in Testing Example 1.
(2) ESR test: strictly consistent with those in Testing Example 1.

Test results: as shown in the table below.

**Table 4. Test data obtained from this testing example and the ratio of each test object**

| Group | (In the conductive adhesive layer) conductive agent : binder | Capacity (F) | ESR (Ω) |
|---|---|---|---|
| Experimental Group 1B | 0.3:99.7 | 0.518 | 2.25 |
| Experimental Group 2B | 0.5:99.5 | 0.557 | 1.86 |
| Experimental Group 1A | 1:99 | 0.594 | 1.52 |
| Experimental Group 3B | 4:96 | 0.529 | 1.95 |
| Experimental Group 4B | 5:95 | 0.382 | 3.01 |

### Result analysis

From the comparison of the capacitors provides by Experimental Groups 1C-4C and Experimental Group 1A, it can be found that with the decrease of the conductive agent content in the conductive adhesive layer, the capacity of the capacitor shows a trend of first increasing and then decreasing, and the ESR impedance of the capacitor shows a trend of first decreasing and then increasing; in a case where the mass ratio of the binder to the conductive agent in the conductive adhesive layer is (0.5-4):(96-99.5), the capacitor has a higher capacity and lower ESR impedance at the same time.

### Example 3

### Experimental Group 1C

In this experimental group, a capacitor is prepared referring to the preparation method provided by Experimental Group 1A. The difference between this experimental group and Experimental Group 1A is that: the thicknesses of the positive electrode conductive adhesive layer 7 and the negative electrode conductive adhesive layer 8 were adjusted to 10 µm. Other raw material ratios and preparation method were strictly consistent with those in Experimental Group 1A.

### Experimental Group 2C

In this experimental group, a capacitor is prepared referring to the preparation method provided by Experimental Group 1A. The difference between this experimental group and Experimental Group 1A is that: the thicknesses of the positive electrode conductive adhesive layer 7 and the negative electrode conductive adhesive layer 8 were adjusted to 30 µm. Other raw material ratios and preparation method were strictly consistent with those in Experimental Group 1A.

### Experimental Group 3C

In this experimental group, a capacitor is prepared referring to the preparation method provided by Experimental Group 1A. The difference between this experimental group and Experimental Group 1A is that: the thicknesses of the positive electrode conductive adhesive layer 7 and the negative electrode conductive adhesive layer 8 were adjusted to 70 µm. Other raw material ratios and preparation method were strictly consistent with those in Experimental Group 1A.

### Experimental Group 4C

In this experimental group, a capacitor is prepared referring to the preparation method provided by Experimental Group 1A. The difference between this experimental group and Experimental Group 1A is that: the thicknesses of the positive electrode conductive adhesive layer 7 and the negative electrode conductive adhesive layer 8 were adjusted to 100 µm. Other raw material ratios and preparation method were strictly consistent with those in Experimental Group 1A.

### Experimental Group 5C

In this experimental group, a capacitor is prepared referring to the preparation method provided by Experimental Group 1A. The difference between this experimental group and Experimental Group 1A is that: in the preparation process of the negative electrode active material layer 2, the same mass of a negative electrode conductive agent was used to replace the porous carbon electrode material in Experimental Group 1A. Other raw material ratios and preparation method were strictly consistent with those in Experimental Group 1A.

### Testing Example 3

Test objects: the capacitors provided by the Experimental Group 1A and all Experimental Groups of Example 3.

### Test items and test methods

(1) Capacity test: strictly consistent with those in Testing Example 1.
(2) ESR test: strictly consistent with those in Testing Example 1.

Test results: as shown in the table below.

**Table. 5 Test data obtained from this testing example and the variable parameters ratio of each test object**

| Group | Thickness of the conductive adhesive layer | Whether porous carbon electrode material contained in negative electrode | Capacity (F) | ESR (Ω) |
|---|---|---|---|---|
| Experimental Group 1C | 10 µm | Yes | 0.490 | 2.32 |
| Experimental Group 2C | 30 µm | Yes | 0.557 | 1.75 |
| Experimental Group 1A | 50 µm | Yes | 0.594 | 1.52 |
| Experimental Group 3C | 70 µm | Yes | 0.586 | 1.68 |
| Experimental Group 4C | 100 µm | Yes | 0.490 | 2.30 |
| Experimental Group 5C | 50 µm | No | 0.410 | 2.58 |

### Result analysis

From the comparison of the capacitors provided by Experimental Groups 1C-4C and Experimental Group 1A, it can be found that with the increase of the thickness of the conductive adhesive layer, the capacity of the capacitor shows a trend of first increasing and then decreasing, and the ESR impedance of the capacitor shows a trend of first decreasing and then increasing, wherein the impedance of the capacitor in Experimental Group 1A is the smallest, only 1.52 Ω.

From the comparison of the capacitors provided by Experimental Group 1A and Experimental Group 5C, it can be found that in a case where the porous carbon electrode material is used in the negative electrode active coating layer, the capacitor has a higher energy density, larger capacity, and smaller ESR impedance.

## Claims

1. A capacitor electrode sheet, comprising an electrode active material layer and a conductive adhesive layer composited with the electrode active material layer.

2. The capacitor electrode sheet according to claim 1, wherein the conductive adhesive layer comprises a binder and a conductive agent, and a mass ratio of the binder to the conductive agent is (0.5-4) : (96-99.5).

3. The capacitor electrode sheet according to claim 2, wherein in the conductive adhesive layer, a specific surface area of the conductive agent is 40-100 m²/g, and a median particle size D₅₀ of the conductive agent is 10-100 nm.

4. The capacitor electrode sheet according to claim 1, wherein a thickness of the conductive adhesive layer is 10-100 µm.

5. The capacitor electrode sheet according to claim 1, wherein the electrode active material layer comprises a negative electrode active material, a negative electrode conductive agent, and a negative electrode binder, and the negative electrode active material comprises at least one of a lithium-containing oxide negative electrode material, a carbon-based negative electrode material, and a silicon-based negative electrode material.

6. The capacitor electrode sheet according to claim 5, wherein the electrode active material layer further comprises a porous carbon electrode material, and a specific surface area of the porous carbon electrode material is 1400-2000 m²/g.

7. The capacitor electrode sheet according to claim 1, wherein the electrode active material layer comprises a positive electrode active material, a positive electrode conductive agent, and a positive electrode binder, and the positive electrode active material comprises a lithium-containing compound.

8. A preparation method for the capacitor electrode sheet according to any one of claims 1-7, comprising the following steps:
mixing a binder, a conductive agent and a solvent to prepare a conductive adhesive material; coating the conductive adhesive material on a surface of the electrode active material layer, ; and curing and rolling pressing to obtain the capacitor electrode sheet.

9. A capacitor, comprising the capacitor electrode sheet according to any one of claims 1-7, or comprising the capacitor electrode sheet prepared by the preparation method according to claim 8.

10. The capacitor according to claim 9, which comprises a shell and a cover insulated connected to the shell, and the shell and the cover form an accommodating cavity, a positive electrode sheet, a separator, and a negative electrode sheet laminated in sequence inside the accommodating cavity, wherein the positive electrode sheet is at least partially connected to the shell, the negative electrode sheet is at least partially connected to the cover; the positive electrode sheet and/or the negative electrode sheet comprise the capacitor electrode sheet, and the conductive adhesive layer of the capacitor electrode sheet is arranged face away from the separator.
